(19) Europäisches Patentamt
European Patent Office
Office européen des brevets

(11) **EP 4 650 422 A1**

(12) **EUROPEAN PATENT APPLICATION**

(43) Date of publication:
**19.11.2025 Bulletin 2025/47**

(21) Application number: **24175476.1**

(22) Date of filing: **13.05.2024**

(51) International Patent Classification (IPC):
*C11D 3/37* *(2006.01)*   *C11D 17/04* *(2006.01)*

(52) Cooperative Patent Classification (CPC):
**C11D 3/3753; C11D 17/042**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **The Procter & Gamble Company Cincinnati, OH 45202 (US)**

(72) Inventors:
- **COURCHAY, Florence Catherine**
  **1853 Strombeek-Bever (BE)**
- **LI, Shigeng**
  **Merrillville, 46410 (US)**
- **SANATKARAN, Neda**
  **Merrillville, 46410 (US)**

(74) Representative: **P&G Patent Belgium UK
N.V. Procter & Gamble Services Company S.A.
Temselaan 100
1853 Strombeek-Bever (BE)**

(54) **WATER-SOLUBLE UNIT DOSE ARTICLE**

(57)   Water-soluble unit-dose detergent article comprising a water-soluble film enveloping a fabric care or household care detergent composition, wherein the detergent composition comprises a surfactant and the water-soluble film comprises a first film comprising a specific polyvinyl alcohol polymer blend.

FIG. 1.

EP 4 650 422 A1

**Description**

FIELD OF THE INVENTION

Water-soluble unit dose detergent article and a method of making.

BACKGROUND OF THE INVENTION

Water-soluble unit-dose detergent articles have become very popular for use in automatic dishwashing and laundry, in particular articles made from a water-soluble film comprising polyvinyl alcohol. The film envelops the detergent. The water-soluble unit-dose detergent article is added to water and the film dissolves releasing the detergent.

Fast dissolution of the articles is highly desirable, however in some cases the interaction between the detergent and the polyvinyl alcohol during initial dissolution and contact with the water can give rise to gelling that slows down further dissolution, leading to a delay in the cleaning onset and in some cases leaving residues on the treated items. This is more acute in cases in which the cleaning process takes place in short and cold temperature cleaning programs. When the water-soluble unit-dose detergent article is used in a laundry process, residues can be deposited on fabrics or the washing machine. The residues can be redissolved but it might require a further step from the user. Thus, the object of the present invention is to provide a unit-dose detergent article with improved dissolution. It is another object of the present invention to provide a unit-dose detergent article with improved dissolution in short and cold washing programs.

SUMMARY OF THE INVENTION

A first aspect of the present invention is a water-soluble unit dose article. The water-soluble unit dose article comprises a water-soluble film and a detergent composition. The detergent composition is enveloped by the water-soluble film. The detergent composition comprises a surfactant and the water-soluble film comprises a first film. The first film comprises a polyvinyl alcohol polymer blend wherein the polyvinyl alcohol polymer blend comprises two polyvinyl alcohol polymers, polymer A and polymer B. Both polymer A and polymer B consist essentially of a vinyl alcohol monomer unit and a vinyl acetate monomer unit. The polyvinyl alcohol polymer blend comprises:

i) from 5% to 30%, preferably from 10% to 25%, more preferably from 10% to 20% by weight of the polymer blend of polymer A, wherein polymer A has

an average degree of hydrolysis of from 60% to 79%, preferably of from 68% to 75%, more preferably of from 68% to 74%; and

a 4% solution viscosity at 20°C of from 4cP to 7cP, preferably from 4cP to 6cP; and

ii) from 70% to 95%, preferably from 75% to 90%, more preferably from 80% to 90% by weight of the polymer blend of polymer B, wherein polymer B has

an average degree of hydrolysis of from 70% to 79%, preferably of from 70% to 75%, more preferably of from 70% to 74%; and
a 4% solution viscosity at 20°C of from 12cP to 18cP, preferably from 13cP to 17cP.

A second aspect of the present invention is a process for making the water-soluble unit dose detergent article of the invention, comprising the steps of:

i) thermoforming and/or vacuum forming the film to create a cavity;
ii) filling the cavity with a detergent composition or part thereof; and
iii) closing the cavity with another film and/or a pre-formed compartment comprising a detergent composition or part thereof to create a single compartment or a multi-compartment water-soluble unit dose detergent article.

BRIEF DESCRIPTION OF THE DRAWINGS

FIG. 1 is a water-soluble unit dose article according to the present invention.
FIG.2 depicts the set up to measure the gelling factor G.

FIG. 3 shows a schematic illustration of the basic configuration of the pouch strength test.

DETAILED DESCRIPTION OF THE INVENTION

As used herein, the articles including "the," "a" and "an" when used in a claim or in the specification, are understood to mean one or more of what is claimed or described.

As used herein, the terms "include," "includes" and "including" are meant to be nonlimiting.

All percentages, ratios and proportions used herein are by weight percent of the composition, unless otherwise specified. All average values are calculated "by weight" of the composition, unless otherwise expressly indicated.

All measurements are performed at 25°C unless otherwise specified.

Unless otherwise noted, all component or composition levels are in reference to the active portion of that component or composition, and are exclusive of impurities, for example, residual solvents or by-products, which may be present in commercially available sources of such components or compositions.

Water-soluble unit dose article

A first aspect of the present invention is a water-soluble unit dose detergent article. The water-soluble unit dose detergent article comprises at least one compartment and a fabric care, preferably a laundry detergent composition, or a household care, preferably an automatic dishwashing detergent composition. The detergent composition is enveloped by the water-soluble film. The detergent composition is described in more detail below. The water-soluble unit dose article can comprise one or more compartments. It comprises a first water-soluble film and optionally a second water-soluble film and a third water-soluble film. The first water-soluble film, the second water-soluble film and the third water-soluble films are described in more detail below.

In the case in which the water-soluble unit dose detergent article comprises at least two compartments, the article comprises water-soluble film shaped such that the unit-dose article comprises at least two internal compartments surrounded by the water-soluble film. The water-soluble unit dose detergent article is constructed such that the detergent composition (preferably laundry or automatic dishwashing) does not leak out of the compartment during storage. However, upon addition of the water-soluble unit dose detergent article to water, the water-soluble film dissolves and releases the contents of the internal compartment into the wash liquor.

The compartment should be understood as meaning a closed internal space within the unit dose article, which holds the detergent composition, preferably a laundry detergent composition or an automatic dishwashing detergent composition.

The first water-soluble film has a first side and a second side. The second water-soluble film, if present, has a first side and a second side. The third water-soluble film, if present, has a first side and a second side.

In the case of a water-soluble unit dose detergent article solely comprising a single compartment, the first side of the first water-soluble film is sealed to the second side of the second water-soluble film to create the single compartment between the first water-soluble film and the second water-soluble film.

In the case of a water-soluble unit dose article comprising at least two compartments in a side-by-side configuration, the first side of the first water-soluble film is sealed to the second side of the second water-soluble film to create the at least two compartments between the first water-soluble film and the second water-soluble film.

In the case of a water-soluble unit-dose detergent article comprising at least two compartments in a superposed configuration, the first side of the first water-soluble film is sealed to the second side of the second water-soluble film to create at least a first compartment between the first water-soluble film and the second water-soluble film, and the first side of the second water-soluble film is sealed to the second side of the third water-soluble film to create at least a second compartment between the second water-soluble film and the third water-soluble film, and the at least second compartment is preferably positioned above the at least first compartment.

Preferably, the first water-soluble film and the second water-soluble film are sealed via solvent sealing, heat sealing, or a mixture thereof, preferably via solvent sealing. More preferably, the solvent sealing solution comprises an aqueous solvent, a non-aqueous solvent, or a mixture thereof. Even more preferably, the solvent sealing solution comprises water. Preferably, the solvent sealing solution comprises at least 95%, or even at least 98%, or even at least 99%, or even 100% by weight of the solvent sealing solution of water. The solvent sealing solution can be applied to a film by any suitable method, including contact and/or non-contact methods. For example, the solvent solution can be applied in a contact transfer process, e.g. using a contact member comprising a non-absorbent or substantially impermeable material, e.g. using an anilox roller, rubber (e.g. EPDM) roller, or any combination thereof, optionally in combination with a doctor blade. The sealing solution can be applied using a drawdown bar, Mayer bar, or similar apparatus. The sealing solution can be applied using a contact member comprising an absorbent material, for example natural felt, synthetic felt, porous plastic, foam, sponge, microfiber, cotton, polyester, extruded polyester fibers, nonwoven webs and the like, e.g. in pad or roller form. The sealing solution can be applied via a dosing nozzle or a spraying nozzle. Combinations of any of the foregoing methods and apparatus are contemplated. Preferably, the solvent sealing solution is applied via a felt roll, via a dosing nozzle, a spraying nozzle, or a combination thereof, more preferably via a felt roll, alternatively via a spraying nozzle. Preferably, the solvent sealing solution is applied to the second side of the second water-soluble film, the second side of the second water soluble film facing the first side of the first water-soluble film.

Preferably, the second water-soluble film and the third water-soluble film are sealed via solvent sealing, heat sealing, or a mixture thereof, preferably via solvent sealing. More preferably, the solvent sealing solution comprises an aqueous solvent, a non-aqueous solvent, or a mixture thereof. Even more preferably, the solvent sealing solution comprises water. Preferably, the solvent sealing solution comprises at least 95%, or even at least 98%, or even at least 99%, or even 100% by weight of the solvent sealing solution of water. The solvent sealing solution can be applied to a film by any suitable method, including contact and/or non-contact methods. For example, the solvent solution can be applied in a contact transfer process, e.g. using a contact member comprising a non-absorbent or substantially impermeable material, e.g. using an anilox roller, rubber (e.g. EPDM) roller, or any combination thereof, optionally in combination with a doctor blade. The sealing solution can be applied using a drawdown bar, Mayer bar, or similar apparatus. The sealing solution can be applied using a contact member comprising an absorbent material, for example natural felt, synthetic felt, porous plastic, foam, sponge, microfiber, cotton, polyester, extruded polyester fibers, nonwoven webs and the like, e.g. in pad or roller form. The sealing solution can be applied via a dosing nozzle or a spraying nozzle. Combinations of any of the foregoing methods and apparatus are contemplated. Preferably the solvent sealing solution is applied via a felt roll, via a dosing or spraying nozzle, or a combination thereof, more preferably via a felt roll, alternatively via a spraying nozzle. Preferably, the solvent sealing solution is applied to the first side of the second water-soluble film, the first side of the second water soluble film facing the second side of the third water-soluble film.

Preferably, the unit dose article comprises at least a third compartment, preferably at least a third and a fourth compartment between the second water-soluble film and the third water-soluble film. Preferably, the second compartment and the third compartment, preferably the second compartment, the third compartment and the fourth compartments are positioned side-by-side to one another and the second compartment and the third compartment, preferably the second compartment, the third compartment and the fourth compartment are positioned above the first compartment. Preferably, the second and third compartments, or the second, third and fourth compartments are smaller than the first compartment. The second and third compartments, or the second, third and fourth compartments may be the same size as one another or may be different sizes. Some of the compartments may be the same size and some may be different sizes.

The detergent composition according to the present invention may be comprised in at least one of the compartments. It may for example be comprised in just one compartment, or may be comprised in two compartments, or even in three compartments, or even in four compartments.

Each compartment may comprise the same or different detergent composition. The different detergent compositions could all be in the same form, or they may be in different forms. Preferably, at least one of the compositions and more preferably, all the compositions are in liquid form.

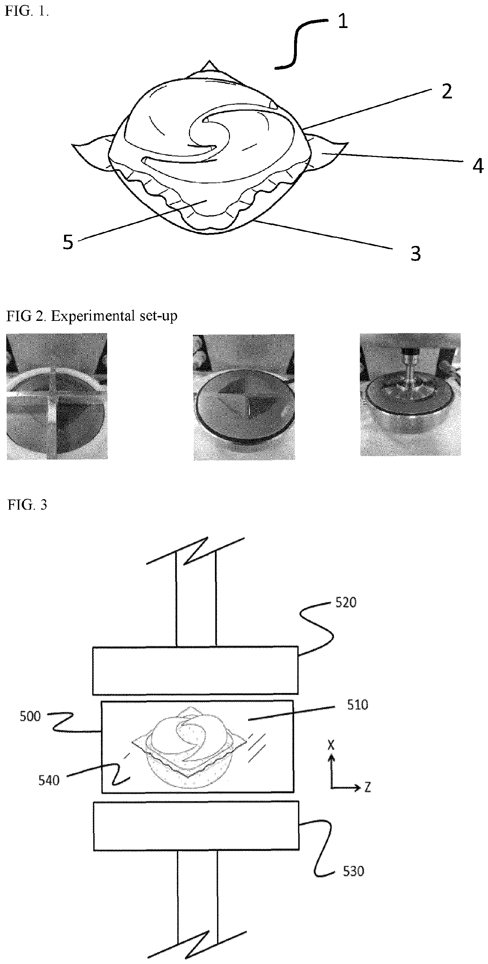

FIG.1 discloses a water-soluble unit dose detergent article (1) according to the present invention. Shown are the first water-soluble film (2) and the third water-soluble film (3) which are sealed together at a seal region (4). Not shown is the second water-soluble film which is positioned between the first water-soluble (2) and the third water-soluble film (3). The detergent composition (5), preferably laundry or automatic dishwashing, is comprised within the water-soluble soluble unit dose article (1).

Intermediate constructions contemplated as aspects of the disclosure herein can include elements of the article or portions of the article in an unsealed state, e.g. to allow for provision of a composition into the intermediate construction prior to final filling of each of the compartments. Thus, for example, an intermediate construction can include a first sealed compartment and a second, partially open compartment ready for filling. The water-soluble unit dose article is constructed such that the one, two or more compositions do not leak out of the two or more compartments during storage. However, upon addition of the water-soluble unit dose article to water, the water-soluble film dissolves and releases the contents of the internal compartment, e.g. into a wash liquor, bulk water, or other environment.

Preferably, the water-soluble unit dose article is coated with a lubricating agent, preferably, the lubricating agent is selected from talc, zinc oxide, silicas, siloxanes, zeolites, silicic acid, alumina, sodium sulphate, potassium sulphate, calcium carbonate, magnesium carbonate, sodium citrate, sodium tripolyphosphate, potassium citrate, potassium tripolyphosphate, calcium stearate, zinc stearate, magnesium stearate, starch, modified starches, clay, kaolin, gypsum, cyclodextrins, or mixtures thereof.

First water-soluble film

The water-soluble unit dose detergent article comprises a first water-soluble film. The first water-soluble film of the present invention is soluble or dispersible in water. The first water-soluble film preferably has a thickness of from 20 to 150 micron, preferably 35 to 125 micron, even more preferably 50 to 110 micron, most preferably about 76 micron. The first water-soluble film has a first side and a second side.

The first water-soluble film material may be obtained by casting, blow-moulding, extrusion or blown extrusion of the polymeric material, as known in the art, preferably the first water-soluble film is a solvent casted water-soluble film.

The first water soluble film comprises a polyvinyl alcohol polymer blend. The polymer blend comprises two different polymers: polymer A and polymer B. Polymer A and polymer B each consist essentially of a vinyl alcohol monomer unit and a vinyl acetate monomer unit. Preferably, the polymer blend consists essentially of polymer A and polymer B. The first film preferably comprises from 50% and 90%, preferably from 55% to 85%, more preferably from 60% to 80% by weight of the film of the polymer blend.

Preferably, the difference in the average degree of hydrolysis between polymer A and polymer B is at most 10%, preferably at most 8.5%, more preferably between 1% and 7%.

Preferably, the difference of the 4% solution viscosity at 20°C between polymer A and polymer B is from 7cP to 13cP, preferably from 9 cP to 11cP.

Preferably, the weight average viscosity of the polyvinyl alcohol resin blend is greater than 12 cP, or at least 12.5 cP, or at least 13 cP, or at least 13.5 cP, or in a range of 12 cP to 20 cP, 12.5 cP to 20 cP, or 12.5 cP to 18 cP, or 12.5. to 16 cP, or 12.5 cP to 14.5 cP. Preferably, the weight average degree of hydrolysis of the polyvinyl alcohol resin blend is less than 80%, preferably from 70% to less than 80% and more preferably from 75% to 79%.

Preferably, the first film has a tensile strength (maximum stress at break) of at least 30 MPa, or at least 31 MPa, or at least 32 MPa, or at least 33 MPa, or at least 34 MPa, or at least 35 MPa, or in a range of 30 MPa to 60 MPa, or 30 MPa to 50 MPa, or 35 MPa to 60 MPa, or 35 MPa to 50 MPa.

Preferably, the first film has a residue value of 54 wt. % or less as measured by the Dissolution Chamber Test at room temperature.

Preferably, the first film has a residue value of 75% or less, preferably 65 wt. % or less as measured by the Dissolution Chamber Test at 5°C.

Preferably, the first film has a biodegradation rate of at least 60% after 60 days, or at least 60% after 28 days according to OECD 301B testing. The first film meets the OECD 301B biodegradability requirements.

Preferably, the polymer blend has a biodegradation rate of at least 60% after 60 days, or at least 60% after 28 days according to OECD 301B testing. The polymer blend meets the OECD 301B biodegradability requirements.

Preferably, the first film has a dissolution time of less than 120 seconds, preferably less than 70 seconds, more preferably less than 60 seconds according to MSTM-205 at 5°C for a 76 micron thick film.

Preferably, an aqueous solution comprising the first film and the detergent composition dissolved therein has a gelling factor of less than 1.25, preferably less than 1.2 and more preferably less than 1.15, wherein

$$G = G'/G''$$

wherein

G' is the "storage" or "elastic" modulus; and

G" is the "loss" or "plastic" modulus;

wherein the aqueous solution is prepared and G' and G" are measured as described herein.

Polymer A

Polymer A consists essentially of a vinyl alcohol monomer unit and a vinyl acetate monomer unit.

The polyvinyl alcohol polymer blend comprises from 5% to 30%, preferably from 10% to 25%, more preferably from 10% to 20% by weight of the polymer blend of polymer A. Polymer A has: i) an average degree of hydrolysis of from 60% to 79%, preferably of from 68% to 75%, more preferably of from 68% to 74%; and ii) a 4% solution viscosity at 20°C of from 4cP to 7cP, preferably from 4cP to 6cP.

Preferably, the blend comprises from 10% to 20% by weight of the polymer blend of polymer A.

Preferably, Polymer A has an average degree of hydrolysis of from 68% to less 74%. Polymer A preferably has a 4% solution viscosity at 20°C of from 4cP to 6cP.

Preferably, the blend comprises from 10% to 20% by weight of the polymer blend of polymer A and polymer A has an average degree of hydrolysis of from 68% to less than 74% and has a 4% solution viscosity at 20°C of from 4cP to 6cP.

Polymer B

Polymer B consists essentially of a vinyl alcohol monomer unit and a vinyl acetate monomer unit.

The blend comprises from 70% to 95%, preferably from 75% to 90%, more preferably from 80% to 90% by weight of the polymer blend of polymer B. Polymer B has an average degree of hydrolysis of from 70% to 79%, preferably of from 78% to 75%, more preferably of from 70% to 74%; and a 4% solution viscosity at 20°C of from 12cP to 18cP, preferably from 13cP to 17cP.

Preferably, the blend comprises from 80% to 90% by weight of the polymer blend of polymer B.

Preferably, Polymer B has an average degree of hydrolysis of from 70% to 74%. Polymer B preferably has a 4% solution viscosity at 20°C of from 13cP to 17cP.

Preferably, the blend comprises from 80% to 90% by weight of the polymer blend of polymer B and polymer B has an average degree of hydrolysis of from 70% to 74% and has a 4% solution viscosity at 20°C of from 13cP to 17cP.

Second water-soluble film

The water-soluble unit dose detergent article can comprise a second water-soluble film. The second water-soluble film is soluble or dispersible in water. Preferably, it has a thickness of from 20 to 150 micron, preferably 35 to 125 micron, even more preferably 50 to 110 micron, most preferably about 76 micron. The second water-soluble film has a first side and a second side.

The second water-soluble film material may be obtained by casting, blow-moulding, extrusion or blown extrusion of the polymeric material, as known in the art, preferably the second water-soluble film is a solvent casted water-soluble film. More preferably the first and second water-soluble films are solvent casted water-soluble films.

The second film comprises a polymer selected from the group consisting of polymer A, polymer B, polymer C, and a mixture thereof. Polymer C comprises polyvinyl alcohol and is different from polymer A, polymer B and the polymer blend of the first film.

Polymer C

Polymer C comprises polyvinyl alcohol and is different from polymer A, polymer B and the polymer blend of the first film. By "different" is herein meant that the polymers differ in at least one feature that can be physical or chemical, for example the polymers can have the same monomer units but in a different ratio, the same monomer units but different degree of hydrolysis, different molecular weight, different viscosity, different anionic monomer unit, different polymer blend or polymer blend ratio, etc.

Polymer C is preferably selected from:

i. a polymer consisting essentially of a vinyl alcohol monomer unit, a vinyl acetate monomer unit and a carboxylated monomer unit. Preferably, the carboxylate monomer unit is selected from an acrylate, a methacrylate, a maleate, or a mixture thereof, more preferably an acrylate.

ii. a blend of polymers consisting essentially of a vinyl alcohol monomer unit and a vinyl acetate monomer unit; and

iii. a polymer blend consisting essentially of a polymer consisting of a vinyl alcohol monomer unit and a vinyl acetate monomer unit, and a polymer consisting essentially of a vinyl alcohol monomer unit, a vinyl acetate monomer unit and a carboxylated monomer unit.

Preferably, Polymer C comprises, more preferably consists of, a polymer consisting essentially of a vinyl alcohol monomer unit, a vinyl acetate monomer unit and a carboxylated monomer unit wherein the carboxylated monomer unit is selected from an acrylate, a methacrylate, a maleate, or a mixture thereof, more preferably an acrylate and wherein the polymer has an average degree of hydrolysis of from 80% to 99%, preferably from 88% to 99% and a 4% solution viscosity at 20°C of from 13cP to 28cP, preferably from 18cP to 26cP and an average degree of anionic substitution of from 1% to 10%, more preferably 1% to 8%, more preferably from 1% to 4%. Preferably, polymer C consists essentially of a vinyl alcohol monomer unit, a vinyl acetate monomer unit and a carboxylated monomer unit wherein the carboxylated monomer unit is acrylic acid and wherein the polymer has an average degree of hydrolysis of from 88% to 99% and a 4% solution viscosity at 20°C of from 18cP to 26cP and an average degree of anionic substitution of from 1% to 4%.

Preferably, polymer C comprises, more preferably consists of:

i) from 1% to 70%, preferably from 30% to 70% by weight of polymer C of a polymer consisting essentially of a vinyl alcohol monomer unit and a vinyl acetate monomer unit, wherein the polymer has an average degree of hydrolysis of from 80% to 99.7%, preferably from 85% to 93%, more preferably from 87% to 89% and a 4% solution viscosity at 20°C of from 14.5cP to 25cP, preferably from 17cP to 24cP; and

ii) from 30% to 99%, preferably from 30% to 70% by weight of polymer C of a polymer consisting essentially of a vinyl alcohol monomer unit, a vinyl acetate monomer unit and a carboxylated monomer unit wherein the carboxylated monomer unit is preferably derived from a maleate monomer unit and salts, esters or anhydrides thereof, most preferably monomethylmaleate monomer units, wherein the polymer has an average degree of hydrolysis of from 80% to 99.7%, preferably from 85% to 95%, more preferably from 88% to 92% and a 4% solution viscosity at 20°C of from 4cP to 40cP, preferably from 10cP to 25cP, more preferably from 15cP to 20cP, and preferably an average degree of anionic substitution of from 1% to 10%, more preferably 1% to 8%, more preferably from 1% to 4%.

Preferably, polymer C consists of:

i) from 30% to 70% by weight of polymer C of a polymer consisting essentially of a vinyl alcohol monomer unit and a vinyl acetate monomer unit, wherein the polymer has an average degree of hydrolysis of from 87% to 89% and a 4% solution viscosity at 20°C of from 17cP to 24cP; and

ii) from 30% to 70% by weight of polymer C of a polymer consisting essentially of a vinyl alcohol monomer unit, a vinyl acetate monomer unit and a carboxylated monomer unit wherein the carboxylated monomer unit is monomethylmaleate, wherein the polymer has an average degree of hydrolysis of from 88% to 92% and a 4% solution viscosity at 20°C of from 15cP to 20cP, and an average degree of anionic substitution of from 1% to 4%.

Preferably, polymer C comprises, more preferably consists of:

i) a first polymer consisting essentially of a vinyl alcohol monomer unit and a vinyl acetate monomer unit, wherein the first polymer has an average degree of hydrolysis of from 80% to 92%, preferably from 84% to 92% and a 4% solution viscosity at 20°C of from 8cP to 40cP, preferably from 10cP to 20cP, more preferably from 12cP to 14cP; and

ii) a second polymer consisting essentially of a vinyl alcohol monomer unit and a vinyl acetate monomer unit, wherein the second polymer has an average degree of hydrolysis of from 80% to 92%, preferably from 84% to 92% and a 4% solution viscosity at 20°C of from 1cP to 20cP, preferably from 3cP to 15cP, more preferably from 5cP to 10cP; and

wherein the first and the second polymers are present in a weight ratio of from about 9:1 to about 1:9, preferably from about 6:4 to about 4:6.

Preferably, polymer C consists of:

i) a first polymer consisting essentially of a vinyl alcohol monomer unit and a vinyl acetate monomer unit, wherein the first polymer has an average degree of hydrolysis of from 84% to 92% and a 4% solution viscosity at 20°C of from 12cP to 14cP; and

ii) a second polymer consisting essentially of a vinyl alcohol monomer unit and a vinyl acetate monomer unit, wherein the second polymer has an average degree of hydrolysis of from 84% to 92% and a 4% solution viscosity at 20°C of from 5cP to 10cP; and

wherein the first and the second polymers are present in a weight ratio of from about 6:4 to about 4:6.

Third water-soluble film

The water-soluble unit dose detergent article can comprise a third water-soluble film. The third water-soluble film is soluble or dispersible in water. Preferably, it has a thickness of from 20 to 150 micron, preferably 35 to 125 micron, even more preferably 50 to 110 micron, most preferably about 76 micron. The third water-soluble film has a first side and a second side.

The third water-soluble film material may be obtained by casting, blow-moulding, extrusion or blown extrusion of the polymeric material, as known in the art, preferably the third water-soluble film is a solvent casted water-soluble film. More preferably the first, second and third water-soluble films are solvent casted water-soluble films.

The third film is different from the first and second film and comprises a polymer selected from the group consisting of polymer A, polymer B, polymer C and mixtures thereof.

Water-soluble unit-dose detergent articles include single compartment pouches made from two films, where the two films are the first film, side-by-side pouches made from two films, where the two films are the first film. Water-soluble unit-dose detergent articles include single compartment pouches and side-by-side pouches made from two films, one of the two films is the first film and the other film is the second film.

Water-soluble unit-dose detergent articles include superposed pouches made from three films. The three films can be the same or different. In the case in which the three films are the same, the three films are the first film. In the case in which the three films are different, one film is the first film, another film is the second film and another film is the third film, and any of the films can be the bottom, middle or top film. Alternatively, two films can be the same and one different in which the two same films are the first film and the different one the second film, or alternatively the different one is the first film and the two same films are the second film. The different film can either be the top film, the middle film or the bottom film.

Measurement methods

The average degree of hydrolysis is measured using standard method JIS K6726.

The viscosity of a polyvinyl alcohol polymer is determined by measuring a freshly made solution using a Brookfield LV type viscometer with UL adapter as described in British Standard EN ISO 15023-2:2006 Annex E Brookfield Test method. It is international practice to state the viscosity of 4% aqueous polyvinyl alcohol solutions (in deionised water) at 20 °C.

The water-soluble films, including the first, second, and third water-soluble films can be characterized by or tested for tensile stress according to the Modulus (MOD) Test as follows. The procedure includes the determination of modulus at 10% elongation according to ASTM D 882 ("Standard Test Method for Tensile Properties of Thin Plastic Sheeting") or equivalent. An INSTRON tensile testing apparatus (Model 5544 Tensile Tester or equivalent) is used for the collection of film data. A minimum of three test specimens, each cut with reliable cutting tools to ensure dimensional stability and reproducibility, are tested in the machine direction (MD) (where applicable) for each measurement. Tests are conducted in the standard laboratory atmosphere of $23 \pm 2.0°C$ and $35 \pm 5$ % relative humidity. One inch wide (2.54 cm) samples of a single film sheet having a thickness of 75 $\mu$m are prepared. The sample is then transferred to the INSTRON tensile testing machine to proceed with testing while minimizing exposure in the 35% relative humidity environment. The tensile testing machine is prepared according to manufacturer instructions, equipped with a 500 N load cell, and calibrated. The correct grips and faces are fitted (INSTRON grips having model number 2702-032 faces, which are rubber coated and 25 mm wide, or equivalent). The samples are mounted into the tensile testing machine and analyzed to determine the 100% modulus (i.e., stress required to achieve 100% film elongation).

The first water-soluble film can be characterized by 100% modulus value of at least about 20 $N/mm^2$ as measured by the MOD Test at 35% RH. Generally, higher MOD values are desirable because they correspond to pouches having a greater stiffness and a lower likelihood of deforming and sticking to each other when loaded on top of each other during production or in final consumer packaging. Further, MOD values at 10% elongation correspond to the ability of the film to maintain stiffness rather than loosen and droop when in contact with liquid pouch contents. In particular, films having higher MOD values correspond to pouches that are less likely to soften and take on a loose and droopy appearance when in contact with liquid pouch contents comprising a low molecular weight polyol.

Dissolution chamber test method.

Within this DC Residue Test method, for each film to be tested, three test specimens are cut from a selected test film having a thickness of 76 $\mu$m using a cutting punch. If cut from a film web made by a continuous process, the specimens should be cut from areas of web evenly spaced along the transverse direction of the web (i.e., perpendicular to the machine direction), if applicable. Weigh the film specimen and track the specimen through the test. Record the initial film weight ($F_o$). Weigh a set of two sonicated, clean, and dry screens for each specimen and track them through the test. Record the initial screen weights (collectively, so for the two screens combined - $S_o$). Assemble a specimen dissolution chamber by flatly sandwiching the film specimen between the center of the two screens, followed by two rubber gaskets (one gasket on each side between the screen and washer), and then the two washers. Secure the dissolution chamber assembly with four binder clips evenly spaced around the washers and the clips folded back away from the screens. Fill a beaker with 1,500 ml of $R_O$ water, e.g. demineralized water, at room temperature (22°C +/- 2°C) or at 5°C +/- 2°C. Set the timer to a prescribed immersion time of 5 minutes. Place the dissolution chamber assembly into the beaker and immediately start the timer, inserting the dissolution chamber assembly at an approximate 45 degrees entry angle into the water surface. This entry angle helps remove air bubbles from the chamber. The dissolution chamber assembly rests on the beaker bottom such that the test specimen film is positioned horizontally about 10 mm from the bottom. The four folded-back binder clips of the dissolution chamber assembly are suitable to maintain the about 10 mm film clearance from the beaker bottom, however, any other equivalent support means may be used. At the end of the 5 minutes, slowly remove the dissolution chamber assembly from the beaker at an approximate 45 degrees angle. Hold the dissolution chamber assembly horizontally over an aluminum pan to catch any drips from the screens and carefully remove the binder clips, washers, and gaskets. Do not break open the sandwiched screens. Place the sandwiched screens (i.e., screen/residual undissolved film/screen) over the aluminum pan and into an oven at 100°C for 30 minutes to dry. Weigh the dried set of sandwiched screens including any residual undissolved film therein. Measure and add to this dried screen weight any dried film drippings captured in and recovered from (e.g., by scraping) the pan when the dissolution chamber assembly was first removed from the beaker and during drying. Record the final sandwiched screen weight (collectively Sf, including the dried film drippings). Calculate % residue ("DC residue") left for the film specimen:

$$DC\ residue = 100 \times ((S_f - S_o)/F_0)$$

Clean the sandwiched screens by soaking them in a beaker of RO water for about 20 minutes. Then, take them apart and do a final rinse in the sonicator (turned on and filled with RO water) for at least 5 minutes or until no residue is visible on the screens.

Gelling factor (G) method

The gelling factor method measures the strength of the gel formed between the enclosed detergent composition and the polyvinylalcohol comprised in the water-soluble film upon initial dissolution in the wash water. This method is designed to provide a lab characterization (using very low water amounts) of the infrequent or extreme in-home process where gelling can occur. It is used as a proxy to assess when the detergent is released into the washing water. If residues are created during the laundry process these residues can be redissolved but it might imply a further step and the purpose of this invention is to reduce the touches needed by the user during the laundry process.

The gelling factor is measured using a plate to plate rotational rheometer (TA Discovery Hybrid Rheometer) using a 60 mm flat spindle. The temperature of the bottom plate is set to 5 °C. An aluminium made cross-based frame (width of each crossbar is 6 mm) is placed on the bottom plate in order to divide the bottom plate in 4 equal quadrants. 1 ml of the detergent composition at room temperature, e.g. 20°C +/- 2°C, is respectively added at two opposing quadrants, creating a substantial triangular shape along the respective crossbars of the frame, as shown in Figure 2. 1 ml of a 10wt% solution of dissolved water-soluble film in demineralized water at room temperature, e.g. 20°C +/- 2°C, is dosed in the remaining 2 opposing quadrants. The cross-based frame is hence removed such that the 4 liquids remain separate. The rotating spindle is hence lowered to measurement condition such that the liquid comes out slightly off the entire perimeter of the spindle. The consequent measurement procedure includes a 30 second temperature conditioning, a peak hold of 180 seconds at 40/s and a gradual oscillatory angular frequency logarithmic sweep (from 100 to 0.016 rad/s within about 38 minutes through a logarithmic sweep at a constant and controlled stress of 0.1Pa, to ensure that the gel is always within the linear visco-elastic regime). The storage modulus (G') and loss modulus (G") are measured at 5 points per decade, which produces 20 data points in total. The average storage modulus (in Pa) and average loss modulus (in Pa) are calculated of the respective values at 0.040, 0.025 and 0.015 rad/s, e.g. the 3 last data points measured. The gelling factor is consequently calculated through dividing the average storage modulus by the average loss modulus value. It is a dimensionless value. Three measurements were taken and the average is taken as the gelling factor.

Dissolution frame method

The cold-water solubility profile of the different polyvinyl alcohol based water soluble films is determined following the MSTM2O5 Disintegration/Dissolution protocol, executed in 10° C demineralized water.

Pouch strength method

This test method describes the practice for determining the pouch strength using the Mark-10 testing instrument ESM750SLCE (j.j. bos b.v., Marconistraat 1, NL-2809 PH Gouda, The Nederlands) with a load cell of maximum 100 kN (kilo Newton). Under the effect of the external compression force, the pouch deforms building stress on both the film and the seal area. The internal pressure in the pouch depends on the outside applied force on the overall pouch surface area. Pouch strength (in Newtons) is defined as the maximum compression force required by two parallel plates to increase the internal pressure of the pouch up to the point of burst. Pouches bursting at the seal area are reported as "seal failures" and are not considered when determing pouch strength. The average value of 18 replicates is reported.

The pouch strength is measured after having stored the water-soluble pouches for 7 days at ambient conditions, and pre-conditioned for 16-24h at 23°C / 50% RH. The method is performed in a room environment between 40-50% relative humidity (RH) and 22-24°C. Water-soluble pouches are tested within one hour of taking them out of the pre-conditioning.

FIG. 3 shows a schematic illustration of the basic configuration of the pouch strength test. To measure pouch strength, a pouch 510 is enclosed in a plastic bag consequently sealed 500 (150 mm by 124 mm with closure, 60 micron thick - e.g. Raja grip RGP6B) to prevent contamination of working environment upon pouch rupture. The pouch 510 is centered in the bag, and placed between two compression plates 520, 530 of the instrument. The pouch 510 is placed in a flat position, so that the width seal dimension 540 (e.g. smallest dimension within a defined rectangular plane just encompassing the seal area, 41mm in actual pouches tested) is placed horizontally between the compression plates (x-direction) the bottom compartment touching one plate, the at least one superposed compartment touching the other compression plate. The diameter of the compression plates needs to be big enough in order not to pinch the pouch as it deforms (here D=116mm). For the compression, the speed of decreasing the distance between the plates 520 and 530 is set at 225 mm/min. 18 replicates are conducted per test leg, and the average pouch strength data across those 18 replicates is reported.

Additional film components

The first, second and/or third water-soluble films can comprise between 0.1% to 3.5%, or 0.1% to 2.5%, or in a range of 1% to 2%, or in a range of 0.5% to 2% by weight of the water-soluble film of a surfactant. Suitable surfactants can include the nonionic, cationic, anionic and zwitterionic classes. Suitable surfactants include, but are not limited to nonionics, including but not limited to polyoxyethylenated polyoxypropylene glycols, alcohol ethoxylates, alkylphenol ethoxylates, tertiary acetylenic glycols and alkanolamides; cationics, including but not limited to polyoxyethylenated amines, quaternary ammonium salts and quaternized polyoxyethylenated amines; and zwitterionics, including but not limited to amine oxides, N-alkylbetaines and sulfobetaines. For example, a nonionic surfactant can be selected from alcohol ethoxylates; a cationic surfactant can be selected from quaternary ammonium salts; and a zwitterionic surfactant can be selected from amine oxides. Other suitable surfactants include dioctyl sodium sulfosuccinate, lactylated fatty acid esters of glycerol and propylene glycol, lactylic esters of fatty acids, sodium alkyl sulfates, polysorbate 20, polysorbate 60, polysorbate 65, polysorbate 80, lecithin, acetylated fatty acid esters of glycerol and propylene glycol, and acetylated esters of fatty acids, and combinations thereof.

The first, second and/or third water-soluble film have a residual moisture content of at least 4%, more preferably in a range of from 4% to 15%, even more preferably of from 5% to 10% by weight of the first water-soluble film as measured by Karl Fischer titration.

The first, second and/or third water-soluble films can comprise one or more components selected from the group consisting of plasticizers, plasticizer compatibilizers, lubricants, release agents, fillers, extenders, cross-linking agents, antiblocking agents, antioxidants, detackifying agents, antifoams, nanoparticles, bleaching agents, aversive agents, surfactants, and combinations thereof.

The first, second and/or third water-soluble film can comprise one or more plasticizers in an amount in a range of between 5% and 50%, preferably between 10% and 40%, most preferably between 20% and 30% by weight of the water-soluble film. Preferably the plasticiser in the water-soluble film is selected from polyols, sugar alcohols, or a mixture thereof, preferably wherein the polyols include polyols selected from the group consisting of glycerol, diglycerin, ethylene glycol, diethylene glycol, triethyleneglycol, tetraethylene glycol, polyethylene glycols up to 400 MW, neopentyl glycol, 1,2-propylene glycol, 1,3-propanediol, dipropylene glycol, polypropylene glycol, 2-methyl-1,3-propanediol, trimethylolpropane and polyether polyols, or a mixture thereof, wherein sugar alcohols include sugar alcohols selected from the group consisting of isomalt, maltitol, sorbitol, xylitol, erythritol, adonitol, dulcitol, pentaerythritol and mannitol, or a mixture thereof. Most preferably the plasticizer is selected from the group consisting of sorbitol, glycerol, dipropyleneglycol, and mixtures thereof.

Preferably the first, second and/or third water-soluble film comprises lubricants / release agents. Suitable lubricants/release agents can include, but are not limited to, fatty acids and their salts, fatty alcohols, fatty esters, fatty amines, fatty amine acetates and fatty amides. Preferred lubricants/release agents are fatty acids, fatty acid salts, and fatty amine acetates. The amount of lubricant/release agent in the first water-soluble film is in a range of from 0.02% to 1.5%, preferably from 0.1% to 1% by weight of the first water-soluble film.

Preferably, the first, second and/or third water-soluble film comprises fillers, extenders, antiblocking agents, detackifying agents or a mixture thereof. Suitable fillers, extenders, antiblocking agents, detackifying agents or a mixture thereof include, but are not limited to, starches, modified starches, crosslinked polyvinylpyrrolidone, crosslinked cellulose, microcrystalline cellulose, silica, metallic oxides, calcium carbonate, talc and mica. Preferred materials are starches, modified starches and silica. Preferably, the amount of filler, extender, antiblocking agent, detackifying agent or mixture thereof in the first water-soluble film is in a range of from 0.1% to 25%, preferably from 1% to 10%, more preferably from 2% to 8%, most preferably from 3% to 5% by weight of the water-soluble film. In the absence of starch, one preferred range for a suitable filler, extender, antiblocking agent, detackifying agent or mixture thereof is from 0.1% to 1%, preferably 4%, more preferably 6%, even more preferably from 1% to 4%, most preferably from 1% to 2.5%, by weight of the water-soluble film.

The first, second and/or third water-soluble film may comprise a printed area. The area of print may be achieved using standard techniques, such as flexographic printing or inkjet printing. The area of print may face an internal compartment of the unit dose article, or may face the outside environment, or both, preferably the area of print faces an internal compartment of the unit dose article.

The first, second and/or third water-soluble film may comprise an aversive agent, for example a bittering agent. Suitable bittering agents include, but are not limited to, naringin, sucrose octaacetate, quinine hydrochloride, denatonium benzoate, or mixtures thereof. Any suitable level of aversive agent may be used in the film. Suitable levels include, but are not limited to, 1 to 5000ppm, or even 100 to 2500ppm, or even 250 to 2000rpm.

Method of making the water-soluble films

The water-soluble films used in the water-soluble unit-dose articles of the disclosure films can be made by any suitable method. Processes for making water-soluble films include solvent casting, blow-molding, extrusion, and blown extrusion, as generally known in the art. Processes for solvent casting are well-known in the art. For example, in the film-forming process, the resins and secondary additives are dissolved in a solvent, typically water, metered onto a surface, allowed to substantially dry (or force-dried) to form a cast film, and then the resulting cast film is removed from the casting surface. The process can be performed batchwise, and is more efficiently performed in a continuous process.

In the formation of continuous films, it is the conventional practice to meter a solution of the resin and secondary components onto a moving casting surface, for example, a continuously moving metal drum or belt, causing the solvent to be substantially removed from the liquid, whereby a self-supporting cast film is formed, and then stripping the resulting cast film from the casting surface. The solution can optionally be metered or coated onto a carrier film, release liner, or removable backing, whereby after solvent removal, the resulting cast film or coating can be separated from the carrier film, release liner, or removable backing (for example, immediately upon drying or at a later point in time, e.g., prior to use) or remain attached to the carrier film, release liner, or removable backing. A film or coating prepared on a carrier film, release liner, or removable backing can be self-supporting or non-self-supporting.

In general, the amount of water in the metered solution of polyvinyl alcohol, additional resins, and/or secondary components for film casting is selected such that when the solution is heated to the casting temperature, the solution has the highest solids level below the viscosity inflection point. Methods of determining the amount of solids at the viscosity inflection point are known in the art. In general, the water content of the metered solution can comprise between 60 to 85% water, or 60 to 75% water to provide suitable solutions for casting at typical casting solutions. The viscosity of the casting solution can be, for example, at least about 20,000 cps at 185 °F (85 °C), at least 30,000 cps at 185 °F (85 °C), for example about 40,000 cps to about 50,000 cps at 185 °F (85 °C).

The solution can be cast at any suitable temperature such that the film has a temperature, for example, in a range of about 50 °C to about 105 °C, during drying. Without intending to be bound by theory, it is believed that as the casting solution and film temperature decreases below about 50 °C, the amount of time required to dry the film undesirably increases, and the length of the drying chamber needed to fully dry the cast solution undesirably increases. Further, without intending to be bound by theory, it is believed that as the solution and film temperature increases above about 105 °C, the solvent may rapidly boil out of the film, resulting in defects in the film surface such as holes or blisters in the finished films and/or facilitate undesirable reactions between adjacent PVOH backbone chain resulting in a film having reduced solubility.

In a continuous or semi-continuous casting process, the moving casting surface can have a line speed in a range of about 5 m/min to about 50 m/min. The line speed can affect the properties of the resulting film, for example, physical properties, thickness, residual moisture content and film quality. In general, as the line speed decreases, the thickness of the resulting film will increase and as the line speed increases, the thickness of the resulting film will decrease, assuming the delivery rate of solution remains constant. In general, as the line speed increases the residence time of the film in the dryer decreases, thereby requiring an increase in drying temperatures, which may result in drying defects or sticking at high enough temperatures. In contrast, as the line speed decreases, the residence time of the film in the dryer increases.

Any of the first, second, third, or additional films according to the disclosure herein can be produced by solvent casting, e.g. using a solvent band casting system. The system can include a tank for mixing and/or storing a polymer solution, having optional secondary additives, for use with a band casting machine having at least a first and a second rotating drums about which a continuous band (e.g. metal band) is tensioned to travel with the rotation of the drums. A sheeting die can apply the polymer solution from the tank to the metal band where a drying chamber, enclosing at least a portion of the metal band downline of the sheeting die, is used to remove solvent from the polymer solution as it travels in a thin sheet on the metal band. In addition, a release coating can be used to provide one or more advantages to the film and/or the process. For example, the release coating can substantially reduce or eliminate bubbles in the produced polymer film, or the release coating can improve the ease of release of the produced film from the casting surface. A roll coater release coating applicator in communication with a supply of a release coating and a portion of the band can transfer fluid release coating to the casting surface prior to application of the polymer solution to the band. A suitable solvent band casting system and related materials are further described in U.S. patent application publication No. 2006/0081176 A1, the disclosure of which is incorporated herein by reference in its entirety.

In general, the casting surface can be any suitable substrate for producing polymeric films to one of skill in the art. In embodiments, the substrate can be a casting roller or drum, a casting belt, or a combination thereof. As used herein, the substrate is used for producing a polymer film from a polymer resin or polymer resin solution. The substrate comprises a substrate surface and the substrate surface is coated with a release coating. The polymer resin solution can be cast onto a substrate while the substrate is moving, e.g. rotating. In embodiments, the substrate is a casting drum. In embodiments, the substrate is a casting belt. The substrate can comprise stainless steel, and optionally can have a stainless steel surface. The substrate can comprise stainless steel that is optionally plated, e.g. chrome plated, nickel plated, zinc plated

EP 4 650 422 A1

or a combination thereof.

In general, the release coating can comprise one or more surfactants and an optional carrier, e.g. water.

The release coating can be applied to the surface of a substrate and optionally subsequently dried prior to casting a polymer resin or polymer resin solution onto the surface coated substrate. In embodiments, the release coating can have a pH of about 1 to about 5 when applied to the surface of the substrate, prior to drying the release coating on the surface of the substrate.

In general, the release coating can have a surfactant concentration in a range of about 0.001 wt% to about 100 wt%, based on the total weight of the release coating. In embodiments, the release coating can have a surfactant concentration in a range of about 0.001 wt% to about 20 wt% prior to drying the release coating on the surface of the substrate. For example, the release coating can have a surfactant concentration in a range of about 0.001 wt% to about 10 wt%, or about 0.01 wt% to about 5 wt%, or about 0.01 wt% to about 4 wt%, or about 0.01 wt% to about 3 wt%, or about 0.01 wt% to about 2 wt%, or about 0.05 wt% to about 2 wt%, or about 0.1 wt% to about 2 wt%, or about 0.5 wt% to about 2 wt%, prior to drying the release coating on the surface of the substrate. In embodiments, the release coating can have a surfactant concentration in a range of about 0.01 wt% to about 4.00 wt%, based on the total weight of the release coating prior to drying the release coating on the surface of the substrate. In embodiments, the release coating can have a surfactant concentration in a range of about 0.05 wt% to about 2.00 wt%, based on the total weight of the release coating prior to drying the release coating on the surface of the substrate. In embodiments, the release coating can have a surfactant concentration in a range of about 2.5 wt% to about 100 wt%, based on the total weight of the release coating, after drying the release coating on the surface of the substrate. For example, after drying the release coating on the surface of the substrate, the release coating can have a surfactant concentration in a range of about 3 wt% to about 100 wt%, or about 4 wt% to about 90 wt%, or about 4 wt% to about 80 wt%, or about 4 wt% to about 70 wt%, or about 4 wt% to about 50 wt%, or about 4 wt% to about 30 wt%, or about 4 wt% to about 20 wt%, or about 4.7 wt% to about 100 wt%, or about 5 wt% to about 90 wt%, based on the total weight of the release coating. In embodiments, the release coating can have a surfactant concentration in a range of about 4.7 wt% to about 100 wt%, based on the total weight of the release coating, after drying the release coating on the surface of the substrate. For example, the release coating can include an amount of ZONYL surfactant in a range of about 0.05% by weight to about 5.0% by weight, based on the total weight of the release coating.

In general, the release coating as described herein can have a hydrophilic-lipophilic balance in a range of about 1 to about 30. In embodiments, the release coating can have a hydrophilic-lipophilic balance in a range of about 1 to about 20, or about 1 to about 18, or about 1 to about 17, or about 1 to about 16, or about 1 to about 15, or about 2 to about 17, or about 3 to about 17, or about 4 to about 15, or about 5 to about 12, or about 8 to about 12. In embodiments, the release coating can have a hydrophilic-lipophilic balance in a range of about 1 to about 20. In embodiments, the release coating can have a hydrophilic-lipophilic balance in a range of about 3 to about 17.

In general, the release coating has a thickness of about 0.1 nm to about 100 nm on the surface of the substrate. In embodiments, the release coating has a thickness of about 0.1 nm to about 80 nm, or about 0.1 nm to about 60 nm, or about 0.1 nm to about 40 nm, or about 0.1 nm to about 40 nm, or about 0.1 nm to about 20 nm, or about 0.1 nm to about 10 nm, or about 1 nm to about 10 nm, or about 1 nm to about 5 nm, on the surface of the substrate. In embodiments, the release coating has a thickness of about 0.1 nm to about 40 nm on the surface of the substrate. In embodiments, the release coating has a thickness of about 0.1 nm to about 10 nm on the surface of the substrate.

The laundry or automatic dishwashing detergent composition

The water-soluble unit dose detergent article comprises a fabric care or household care detergent composition, preferably a laundry or automatic dishwashing detergent composition, more preferably a laundry detergent composition.

The laundry detergent composition is preferably a liquid laundry detergent composition.

The term 'liquid laundry detergent composition' refers to any laundry detergent composition comprising a liquid capable of wetting and treating a fabric, and includes, but is not limited to, liquids, gels, pastes, dispersions and the like. The liquid composition can include solids or gases in suitably subdivided form, but the liquid composition excludes forms which are non-fluid overall, such as tablets or granules.

The liquid detergent composition can be used in a fabric hand wash operation or may be used in an automatic machine fabric wash operation, preferably in an automatic machine fabric wash operation.

Preferably, the liquid laundry detergent composition comprises from 5% to 60% preferably from 15% to 55% by weight of the laundry detergent composition of a non-soap anionic surfactant. Preferably, the detergent composition comprises between 20% and 55%, more preferably between 25% and 50% of a non-soap anionic surfactant. Preferably, the non-soap anionic surfactant comprises linear alkylbenzene sulphonate. Preferably, the linear alkylbenzene sulphonate comprises $C_{10}$-$C_{16}$ alkyl benzene sulfonate, $C_{11}$-$C_{14}$ alkyl benzene sulphonate or a mixture thereof. Preferably, the alkylbenzene sulphonate is an amine neutralized alkylbenzene sulphonate, an alkali metal neutralized alkylbenzene sulphonate or a mixture thereof. The amine is preferably selected from monoethanolamine, triethanolamine or mixtures thereof. The alkali metal is preferably selected from sodium, potassium, magnesium or a mixture thereof.

Preferably, the liquid laundry detergent composition comprises between 1% and 40%, preferably between 3% and 40%, more preferably between 6% and 35% by weight of the liquid laundry detergent composition of the linear alkylbenzene sulphonate.

Preferably, the non-soap anionic surfactant comprises an alkyl sulphate anionic surfactant wherein the alkyl sulphate anionic surfactant is selected from alkyl sulphate, an alkoxylated alkyl sulphate or a mixture thereof. The alkyl sulphate anionic surfactant may be a primary or a secondary alkyl sulphate anionic surfactant, or a mixture thereof, preferably a primary alkyl sulphate anionic surfactant. Preferably, the alkoxylated alkyl sulphate comprises ethoxylated alkyl sulphate, propoxylated alkyl sulphate, a mixed ethoxylated/propoxylated alkyl sulphate, or a mixture thereof, more preferably an ethoxylated alkyl sulphate. Preferably, the ethoxylated alkyl sulphate has an average degree of ethoxylation of between 0.1 to 5, preferably between 0.5 and 3. Preferably, the ethoxylated alkyl sulphate has an average alkyl chain length of between 8 and 18, more preferably between 10 and 16, most preferably between 12 and 15. Preferably, the alkyl chain of the alkyl sulphate anionic surfactant is linear, branched or a mixture thereof. Preferably, the branched alkyl sulphate anionic surfactant is a branched primary alkyl sulphate, a branched secondary alkyl sulphate, or a mixture thereof, preferably a branched primary alkyl sulphate, wherein the branching preferably is in the 2-position, or alternatively might be present further down the alkyl chain, or could be multi-branched with branches spread over the alkyl chain. The weight average degree of branching of alkyl sulphate anionic surfactant may be from 0% to 100% preferably from 0% to 95%, more preferably from 0% to 60%, most preferably from 0% to 20%. Alternatively, the weight average degree of branching of alkyl sulphate anionic surfactant may be from 70% to 100%, preferably from 80% to 90%. Preferably, the alkyl chain is selected from naturally derived material, synthetically derived material or mixtures thereof. Preferably, the synthetically derived material comprises oxo-synthesized material, Ziegler-synthesized material, Guerbet-synthesized material, Fischer-Tropsch - synthesized material, iso-alkyl synthesized material, or mixtures thereof, preferably oxo-synthesized material. Preferably, the liquid laundry detergent composition comprises between 1% and 35%, preferably between 3% and 30%, more preferably between 6% and 20% by weight of the liquid laundry detergent composition of the alkyl sulphate anionic surfactant.

Preferably, the non-soap anionic surfactant comprises linear alkyl benzene sulphonate and an alkoxylated alkyl sulphate, more preferably, wherein the weight ratio of linear alkylbenzene sulphonate to alkoxylated alkyl sulphate is from 1:2 to 9:1, preferably from 1: 1 to 7:1, more preferably from 1:1 to 5:1, most preferably from 1:1 to 4:1.

The liquid laundry detergent composition comprises from 2.5% to 30%, preferably between 4% and 25%, more preferably between 8% and 20% by weight of the liquid laundry detergent composition of a non-ionic surfactant, preferably the nonionic surfactant consists of alkoxylated alcohol. The non-ionic surfactant is described in more detail below.

Preferably, the weight ratio of non-soap anionic surfactant to non-ionic surfactant is from 1:1 to 13:1, preferably from 1.25:1 to 10:1, more preferably from 1.5:1 to 7.5:1.

Preferably, the non-ionic surfactant comprises an alkoxylated alcohol, wherein the alkoxylated alcohol is derived from a synthetical alcohol, a natural alcohol or a mixture thereof. The alkoxylated alcohol can be a primary alkoxylated alcohol, a secondary alkoxylated alcohol, or a mixture thereof, preferably a primary alkoxylated alcohol. Preferably, the alkoxylated alcohol comprises ethoxylated alcohol, propoxylated alcohol, a mixed ethoxylated/propoxylated alcohol, or a mixture thereof, more preferably an ethoxylated alcohol. Alternatively, the alkoxylated alcohol might also include higher alkoxy groups such as butoxy groups. When mixed alkoxy groups, the alkoxy groups can be randomnly ordered or present in blocks, preferably are present in blocks. For example, mixed ethoxy (EO)/propoxy (PO) groups might be ordered in EO/PO blocks, PO/EO blocks, EO/PO/EO blocks or PO/EO/PO blocks. Preferably, the ethoxylated alcohol has an average degree of ethoxylation of between 0.1 to 20, preferably between 5 and 15, most preferably between 6 and 10. If propoxylation is present, preferably the average degree of propoxylation is between 0.1 to 25, more preferably between 2 and 20, most preferably between 5 and 10. Preferably, the alkoxylated preferably ethoxylated alcohol has an average alkyl chain length of between 8 and 18, more preferably between 10 and 16, most preferably 12 and 16. Preferably, the alkyl chain of the alkoxylated alcohol is linear, branched or a mixture thereof, wherein the branched alkyloxylated alcohol is a branched primary alkoxylated alcohol, a branched secondary alkoxylated alcohol, or a mixture thereof, preferably a branched primary alkoxylated alcohol. Preferably, the weight average degree of branching of the alkoxylated alcohol is from 0% to 100% preferably from 0% to 95%, more preferably 0% to 60%, most preferably from 0% to 40%. The branching can be on the 2-alkyl position, or alternatively further down the alkyl chain, or can be multi-branched with individual branches spread over the alkyl chain. Preferably, the synthetically derived material comprises oxo-synthesized material, Ziegler-synthesized material, Guerbet-synthesized material, Fischer-Tropsch - synthesized material, iso-alkyl branched materials, or mixtures thereof, preferably oxo-synthesised material. Preferably wherein the nonionic surfactant consists of the alkoxylated alcohol. Without wishing to be bound by theory, non-ionic surfactants, especially alkoxylated alcohol non-ionic surfactants provide the benefit of excellent body soil cleaning and soil suspension.

Preferably, the liquid laundry detergent composition comprises a fatty acid, preferably a neutralized fatty acid soap, preferably a fatty acid salt, more preferably an amine neutralized fatty acid salt, wherein preferably the amine is an alkanolamine more preferably selected from monoethanolamine, diethanolamine, triethanolamine or a mixture thereof, more preferably monoethanolamine. The liquid detergent composition may comprise between 1.5% and 20%, between 2% and 15%, between 3% and 12%, or between 4% and 10% by weight of the liquid detergent composition of fatty acid.

Preferably, the liquid laundry detergent composition comprises between 1% and 20%, preferably between 5% and 15% by weight of the liquid laundry detergent composition of water. Preferably, the liquid laundry detergent composition comprises between 10% and 40%, preferably between 15% and 30% by weight of the liquid laundry detergent composition of a non-aqueous solvent, preferably wherein the non-aqueous solvent is selected from 1,2-propanediol, dipropylene glycol, tripropyleneglycol, glycerol, sorbitol, polyethylene glycol or a mixture thereof.

Preferably, the liquid laundry detergent composition comprises an adjunct ingredient selected from the group comprising builders, perfumes, enzymes, citrate, bleach, bleach catalyst, dye, hueing dye, brightener, cleaning polymers including alkoxylated polyamines and polyethyleneimines, soil release polymer, fabric care polymers including cationic hydroxyethyl celluloses and cationic polyglucans, surfactant, solvent, dye transfer inhibitors, chelant, encapsulated perfume, polycarboxylates, structurant, pH trimming agents, anti-oxidants including Ralox 35, and mixtures thereof.

Preferably, the laundry detergent composition comprises an enzyme selected from the group comprising hemicellulases, peroxidases, proteases (including metalloproteases), cellulases, xylanases, lipases, phospholipases, esterases, cutinases, pectinases, keratanases, reductases, oxidases, phenoloxidases, lipoxygenases, ligninases, pullulanases, tannases, pentosanases, malanases, β-glucanases, arabinosidases, hyaluronidase, chondroitinase, laccase, xyloglucanases, mannanases and amylases, nucleases, or mixtures thereof, preferably an enzyme selected from the group comprising proteases (including metalloproteases), amylase, cellulase, lipases, xyloglucanases, mannanases, nucleases, and mixtures thereof.

Preferably, the liquid laundry detergent composition has a pH between 6 and 10, more preferably between 6.5 and 8.9, most preferably between 7 and 8, wherein the pH of the laundry detergent composition is measured as a 10% product concentration in deionised water at 20°C.

The liquid laundry detergent composition may be Newtonian or non-Newtonian. Preferably, the liquid laundry detergent composition is non-Newtonian. Without wishing to be bound by theory, a non-Newtonian liquid has properties that differ from those of a Newtonian liquid, more specifically, the viscosity of non-Newtonian liquids is dependent on shear rate, while a Newtonian liquid has a constant viscosity independent of the applied shear rate. The decreased viscosity upon shear application for non-Newtonian liquids is thought to further facilitate liquid detergent dissolution. The liquid laundry detergent composition described herein can have any suitable viscosity depending on factors such as formulated ingredients and purpose of the composition.

The composition may be an automatic dish washing detergent composition preferably comprising an ingredient selected from surfactant, builder, sulfonated / carboxylated polymer, silicone suds suppressor, silicate, metal and/or glass care agent, enzyme, bleach, bleach activator, bleach catalyst, source of alkalinity, perfume, dye, solvent, filler and mixtures thereof.

A preferred surfactant for use in automatic dishwashing detergents is low foaming by itself or in combination with other components (e.g. suds suppressers). Preferred for use herein are low and high cloud point nonionic surfactants and mixtures thereof including nonionic alkoxylated surfactants (especially ethoxylates derived from C6-C18 primary alcohols), ethoxylated-propoxylated alcohols (e.g., Olin Corporation's POLY-TERGENT® SLF18), epoxy-capped poly(oxyalkylated) alcohols (e.g., Olin Corporation's POLY-TERGENT® SLF18B, ether-capped poly(oxyalkylated) alcohol surfactants, and block polyoxyethylene-polyoxypropylene polymeric compounds such as PLURONIC®, REVERSED PLURONIC®, and TETRONIC® series by the BASF-Wyandotte Corp., Wyandotte, Michigan; amphoteric surfactants such as the C12-C20 alkyl amine oxides (preferred amine oxides for use herein include lauryldimethyl amine oxide and hexadecyl dimethyl amine oxide), and alkyl amphocarboxylic surfactants such as MIRANOL™ C2M; and zwitterionic surfactants such as the betaines and sultaines; and mixtures thereof. Surfactants can be present at a level of from 0.2% to 30% by weight, more preferably from 0.5% to 10% by weight, most preferably from 1% to 5% by weight of a detergent composition.

Builders suitable for use in the detergent composition described herein include water-soluble builders, including citrates, carbonates, silicate and polyphosphates, e.g. sodium tripolyphosphate and sodium tripolyphosphate hexahydrate, potassium tripolyphosphate and mixed sodium and potassium tripolyphosphate salts.

Enzymes suitable for use in the detergent composition described herein include bacterial and fungal cellulases including CAREZYME® and CELLUZYME® (Novo Nordisk A/S); peroxidases; lipases including AMANO-P® (Amano Pharmaceutical Co.), M1 LIPASE® and LIPOMAX® (Gist-Brocades) and LIPOLASE® and LIPOLASE ULTRA® (Novo); cutinases; proteases including ESPERASE®, ALCALASE®, DURAZYM® and SAVINASE® (Novo) and MAXATASE®, MAXACAL®, PROPERASE® and MAXAPEM® (Gist-Brocades); α and β amylases including PURAFECT® OX AM (Genencor) and TERMAMYL®, BAN®, FUNGAMYL®, DURAMYL®, and NATALASE® (Novo); pectinases; and mixtures thereof. Enzymes can be added herein as prills, granulates, or cogranulates at levels typically in the range from 0.0001% to 2% pure enzyme by weight of the cleaning composition.

Suds suppressers suitable for use in the detergent composition described herein include nonionic surfactants having a low cloud point. "Cloud point" as used herein, is a well known property of nonionic surfactants which is the result of the surfactant becoming less soluble with increasing temperature, the temperature at which the appearance of a second phase is observable is referred to as the "cloud point." As used herein, a "low cloud point" nonionic surfactant is defined as a nonionic surfactant system ingredient having a cloud point of less than 30 °C, preferably less than about 20 °C, and even more preferably less than about 10 °C, and most preferably less than about 7.5 °C. Low cloud point nonionic surfactants can include nonionic alkoxylated surfactants, especially ethoxylates derived from primary alcohol, and polyoxypropylene/polyoxyethylene/polyoxypropylene (PO/EO/PO) reverse block polymers. Also, such low cloud point nonionic surfactants can include, for example, ethoxylated-propoxylated alcohol (e.g., BASF POLY-TERGENT® SLF18) and epoxy-capped poly(oxyalkylated) alcohols (e.g., BASF POLY-TERGENT® SLF18B series of nonionics.

Other suitable components for use in the detergent composition described herein include cleaning polymers having anti-redeposition, soil release or other detergency properties. Anti-redeposition polymers for use herein include acrylic acid containing polymers such as SOKALAN® PA30, PA20, PA15, PA10 and SOKALAN® CP10 (BASF GmbH), ACUSOL® 45N, 480N, 460N (Rohm and Haas), acrylic acid/maleic acid copolymers such as SOKALAN® CP5, and acrylic/methacrylic copolymers. Other suitable polymers include amine-based polymers such as alkoxylated polyalkyleneimines (e.g., PEI600 EO20 and/or ethoxysulfated hexamethylene diamine dimethyl quats), which, optionally, may be quaternized. Soil release polymers for use herein include alkyl and hydroxyalkyl celluloses, polyoxyethylenes, polyoxypropylenes and copolymers thereof, and nonionic and anionic polymers based on terephthalate esters of ethylene glycol, propylene glycol and mixtures thereof.

Heavy metal sequestrants and crystal growth inhibitors are also suitable for use in the detergent, for example diethylenetriamine penta(methylene phosphonate), ethylenediamine tetra(methylene phosphonate) hexamethylenediamine tetra(methylene phosphonate), ethylene diphosphonate, hydroxy-ethylene-1,1-diphosphonate, nitrilotriacetate, ethylenediaminotetracetate, ethylenediamine-N,N'-disuccinate in their salt and free acid forms.

Suitable for use in the detergent composition described herein is also a corrosion inhibitor, for example organic silver coating agents (especially paraffins such as WINOG® 70 sold by Wintershall, Salzbergen, Germany), nitrogen-containing corrosion inhibitor compounds (for example, benzotriazole and benzimadazole and Mn(II) compounds, particularly Mn(II) salts of organic ligands.

Other suitable components for use in the detergent composition herein include enzyme stabilizers, for example calcium ion, boric acid and propylene glycol.

Suitable rinse additives are known in the art. Commercial rinse aids for dishwashing typically are mixtures of low-foaming fatty alcohol polyethylene/polypropylene glycol ethers, solubilizers (for example cumene sulfonate), organic acids (for example citric acid) and solvents (for example ethanol). The function of such rinse aids is to influence the interfacial tension of the water in such a way that it is able to drain from the rinsed surfaces in the form of a thin coherent film, so that no water droplets, streaks, or films are left after the subsequent drying process.

Process of making the water-soluble unit dose article

A further aspect of the present invention is a process of making a water-soluble unit dose article according to the present invention, the process comprising the steps of:

   i) thermoforming and/or vacuum forming the water-soluble film to create a cavity;
   ii) filling the cavity with a detergent composition or part thereof; and
   iii) closing the cavity with another film and/or a pre-formed compartment comprising a detergent composition or part thereof to create a single compartment or a multi-compartment water-soluble unit dose detergent article.

Preferably, the process comprises the steps of:

   i) thermoforming and/or vacuum forming the film, that can be the first, second or third film, to create a cavity;
   ii) filling the cavity with a detergent composition or part thereof; and
   iii) closing the cavity with another film, that can be the first, second or third film and/or a pre-formed compartment comprising a detergent composition or part thereof to create a single compartment or a multi-compartment water-soluble unit dose detergent article.

The films and/or pre-formed compartments can be sealed by for example solvent sealing. The water-soluble unit dose detergent article can be made from two or more first films, or a first film and one or more second film, or a first film, a second film and one or more third films, etc.

The process for making the water-soluble unit dose articles could be an automated manufacturing process, such as a conveyer belt, a series of conveyer belts, a drum, a series of drums or a mixture thereof. Alternatively, the process for making the water-soluble unit dose articles may be a manual manufacturing line, in which the one or more sequences or steps are conducted manually. Most preferably the process is an automated process.

Preferably, the process of making the water-soluble unit dose articles is a continuous process. Alternatively, the process of making the water-soluble unit dose articles may be an intermittent or batch process. Preferably the process of making the water-soluble unit dose articles is a continuous making process.

Preferably, the closed intermediate is made on a rotating drum or a horizontal belt, preferably on a rotating drum. Preferably, the filled open cavity in steps a and b is made on a horizontal belt or a rotating drum, preferably on a horizontal belt. Wherein a rotating drum is used, the water-soluble film is preferably maintained in place via vacuum. Wherein a horizontal belt is used, the water-soluble film is preferably maintained in place via vacuum.

Preferably, multiple unit dose articles are formed that are connected to one another by flat areas. Without wishing to be bound by theory, such a process involves making a plurality of water-soluble unit dose articles joined together by non-deformed film to create a water-soluble web of unit dose articles. The non-deformed films are the flat areas of the water-soluble web between the unit dose articles. Therefore, the flat areas may comprise two or more water-soluble films sealed together.

The resultant web of water-soluble unit dose articles connected via flat areas is consequently transferred to a cutting station and cut to produce individual unit dose articles. Preferably the cutting station cuts the web in a machine direction and cross-machine direction. Preferably cutting is achieved using rotating knives. It may be preferred that the cutting is also done in continuous manner, and preferably with constant line speed and preferably while in horizontal position. The cutting device can, for example, be a sharp item, or a hot item, or a laser, whereby in the latter cases, the hot item or laser 'burns' through the film/ sealing area. The cutting can be performed by one or more rotating knives. Preferably, the cutting is performed by one or more rotating knives, wherein the rotating knives cut in a machine direction, a cross-machine direction or a mixture thereof. Preferably the rotating knives rotate at a variable rotational speed.

The solvent sealing solution can be applied by any suitable method, including contact and/or non-contact methods. For example, the solvent solution can be applied in a contact transfer process, e.g. using a contact member comprising a non-absorbent or substantially impermeable material, e.g. using an anilox roller, rubber (e.g. EPDM) roller, or any combination thereof, optionally in combination with a doctor blade. The sealing solution can be applied using a drawdown bar, Mayer bar, or similar apparatus. In another type of embodiment the sealing solution can be applied using a contact member comprising an absorbent material, for example natural felt, synthetic felt, porous plastic, foam, sponge, microfiber, cotton, polyester, extruded polyester fibers, nonwoven webs and the like, e.g. in pad or roller form. Application of solvent sealing solution via a felt roll is particularly contemplated. The solvent sealing solution may be applied via a felt roll, a spray nozzle, a dosing nozzle, or a mixture thereof, preferably via a felt roll or a spray nozzle. Preferably, the solvent sealing solution comprises an aqueous solvent, a non-aqueous solvent or a mixture thereof. Even more preferably, the solvent sealing solution comprises water. Preferably, the solvent sealing solution comprises at least 95%, or even at least 98%, or even at least 99%, or even 100% by weight of the solvent sealing solution of water. Preferably the solvent sealing solution is applied via a felt roll, via a spray nozzle, a dosing nozzle, or a combination thereof, more preferably via a felt roll or via a spray nozzle. Preferably, the solvent sealing solution is applied to the second water-soluble film. Preferably, the solvent sealing solution is present on the water-soluble film between 1g and 30g of sealing solution per square meter preferably between 5g and 20g of sealing solution per square meter.

The water-soluble films may be pre-heated ahead of deformation via a hot plate, an infra-red lamp, or a mixture thereof, preferably an infra-red lamp.

The moulds, in which the articles may be made, can have any shape, length, width and depth, depending on the required dimensions of the pouches. The moulds may also vary in size and shape from one to another, if desirable. For example, the volume of the final unit dose articles can be about 5 ml to about 300 ml, or about 10 ml to 150 ml, or about 20 ml to about 100 ml, and that the mould sizes are adjusted accordingly. Preferably the surface of the mould has a rough texture.

The resulting water-soluble unit dose article preferably has a strength of at least 300N, preferably at least 350N, more preferably at least 400N, as measured following the test method described herein.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

EXAMPLES

The interaction upon initial dissolution in the wash water between a traditional soluble unit dose liquid laundry formulation and a water-soluble film according to the invention as well as a water-soluble film outside the scope of the invention has been studied following the gelling factor test method described herein.

Table 1 describes the liquid laundry detergent composition tested. The liquid detergent composition has been prepared through mixing of the individual detergent components in a batch type process.

Table 2 describes a water-soluble film according to the invention, as well as a water-soluble film outside the scope of the invention. The comparative film is outside the scope of the invention based on having a too high average degree of hydrolysis, a representative film following WO2022132846 prior art.

Table 3 shows the gelling factor data obtained using the test method described herein for the bottom compartment liquid detergent ex Table 1 combinations with the different films ex Table 2. It can be seen that the combination of the liquid detergent composition with a water-soluble film according to the invention yields a far lower gelling factor than the related composition with the film outside the scope of the invention.

Table 1: Liquid detergent composition (wt% - 100% active basis)

| 100% active | Bottom compartment | Top compartment 1 | Top compartment 2 |
|---|---|---|---|
| Neodol 24/7 ethoxylated alcohol nonionic surfactant | 3.2 | 2.5 | 1.3 |
| Linear alkylbenzene sulphonic acid | 27.6 | 26.3 | 17.1 |
| A24E3S | 7.9 | 10.5 | 6.7 |
| Citric acid | 0.7 | 0.7 | 0.4 |
| Fatty acid | 11.5 | 5.2 | 3.3 |
| Ethoxylated polyethyleneimine* | 1.5 | 1.5 | 1.0 |
| Zwitterionic polyamine ** | 1.5 | 1.8 | 1.2 |
| HEDP | 0.7 | 2.2 | 1.4 |
| Texcare SRA300 | - | 2.2 | 2.2 |
| Polyquaternium 10*** | - | - | 7.8 |
| FWA 49 | 0.35 | - | - |
| Antifoam (AF8017) | 0.25 | - | - |
| 1,2-propanediol | 15.6 | 20.3 | 24.1 |
| Glycerol | 5.0 | 6.7 | 4.9 |
| PPG (MW 400) | - | - | 12.7 |
| Monoethanolamine (pH trimming agent) | 9.7 | 10.2 | 6.6 |
| K2SO3 | 0.4 | 0.2 | 0.4 |
| MgCl2 | 0.1 | 0.3 | 0.2 |
| Water | 10.1 | 8.1 | 7.8 |
| Acusol 880 | - | - | 0.2 |
| Hueing dye (Violet 200) | - | 0.4 | - |
| Hydrogenated castor oil | 0.1 | 0.1 | 0.1 |
| Minors (perfume, dyes, antioxidant, preservative...) | Balance to 100% | Balance to 100% | Balance to 100% |
| pH (as 10% aqueous solution) | 7.4 | 7.4 | 7.4 |

*ethoxylated polyethyleneimine having an average degree of ethoxylation of 20 per EO chain and a polyethyleneimine backbone with MW of about 600
** Lutensit Z96 : partially sulfate polyethoxylated hexamethylenediamine, as available from the BASF company
*** premix composition : 37wt% cationic hydroxyethyl cellulose, 60wt% PPG400, 3wt% Acusol 880 - premix components reflected in above formula composition

Table 2: Water-soluble film compositions

| | Inventive film composition | Comparative film composition |
|---|---|---|
| Polymer A (PVOH polymer) | PVOH - PVAcetate | PVOH - PVAcetate |
| Polymer B (PVOH polymer | PVOH - PVAcetate | PVOH - PVAcetate |
| A/B wt%-ratio | 15/85 | 40/60 |
| Average dH (A/B) | 74/79 | 88/88 |

(continued)

|  | Inventive film composition | Comparative film composition |
|---|---|---|
| 4% viscosity (cps) | 5 /15 | 8/13 |

Table 3: Gelling factor data

|  | Gelling factor |
|---|---|
| Inventive film | 1.01 |
| Comparative film | 1.30 |

**Claims**

1. A water-soluble unit-dose detergent article comprising a water-soluble film enveloping a fabric care or household care detergent composition, wherein the detergent composition comprises a surfactant and the water-soluble film comprises a first film comprising a polyvinyl alcohol polymer blend wherein the polymer blend comprises polymer A and polymer B each consisting essentially of a vinyl alcohol monomer unit and a vinyl acetate monomer unit, wherein the polymer blend comprises:

   i) from 5% to 30%, preferably from 10% to 25%, more preferably from 10% to 20% by weight of the polymer blend of polymer A, wherein polymer A has

   an average degree of hydrolysis of from 60% to 79%, preferably of from 68% to 75%, more preferably of from 68% to 74%; and
   a 4% solution viscosity at 20°C of from 4cP to 7cP, preferably from 4cP to 6cP; and

   ii) from 70% to 95%, preferably from 75% to 90%, more preferably from 80% to 90% by weight of the polymer blend of polymer B, wherein polymer B has

   an average degree of hydrolysis of from 70% to 79%, preferably of from 70% to 75%, more preferably of from 70% to 74%; and
   a 4% solution viscosity at 20°C of from 12cP to 18cP, preferably from 13cP to 17cP.

2. An article according to claim 1 wherein the polymer blend comprises:

   i) from 10% to 20% by weight of the polymer blend of polymer A, wherein polymer A has

   an average degree of hydrolysis of from 68% to 74% and
   a 4% solution viscosity at 20°C of from 4cP to 6cP; and

   ii) from 80% to 90% by weight of the polymer blend of polymer B, wherein polymer B has

   an average degree of hydrolysis of from 70% to 74%; and
   a 4% solution viscosity at 20°C of from 13cP to 17cP.

3. An article according to any of claims 1 or 2 wherein the polymer blend consists essentially of polymer A and polymer B.

4. An article according to any of the preceding claims wherein the difference of the 4% solution viscosity at 20°C between polymer A and polymer B is from 7cP to 13cP, preferably from 9 cP to 11cP.

5. An article according to any of the preceding claims wherein the difference in the average degree of hydrolysis between polymer A and polymer B is at most 10%, preferably at most 8.5%, more preferably between 1% and 7%.

6. An article according to any of the preceding claims wherein the first film comprises from 50% to 90%, preferably from 55% to 85%, more preferably from 60% to 80% by weight of the film of the polymer blend.

7. An article according to any of the preceding claims wherein the first film has a tensile strength (maximum stress at break) of at least 30 MPa, or at least 31 MPa, or at least 32 MPa, or at least 33 MPa, or at least 34 MPa, or at least 35 MPa, or in a range of 30 MPa to 60 MPa, or 30 MPa to 50 MPa, or 35 MPa to 60 MPa, or 35 MPa to 50 MPa.

8. An article according to any of the preceding claims wherein the first film has a residue value of 75% or less, preferably 65 wt. % or less as measured by the Dissolution Chamber Test at 5°C.

9. An article according to any of the preceding claims wherein the first film has a biodegradation rate of at least 60% after 60 days, or at least 60% after 28 days according to OECD 301B testing.

10. An article according to any of the preceding claims wherein the polymer blend has a biodegradation rate of at least 60% after 60 days, or at least 60% after 28 days according to OECD 301B testing.

11. An article according to any of the preceding claims wherein the first film has a dissolution time of less than 120 seconds, preferably less than 70 seconds, more preferably less than 60 seconds according to MSTM-205 at 5°C for a 76 micron thick film.

12. An article according to any of the preceding claims wherein an aqueous solution comprising the first film and the detergent composition dissolved therein has a gelling factor of less than 1.25, preferably less than 1.2, more preferably less than 1.15, wherein

$$G=G'/G''$$

wherein

G' is the "storage" or "elastic" modulus; and
G" is the "loss" or "plastic" modulus;
wherein the aqueous solution is prepared and G' and G" are measured as described herein.

13. An article according to any of the preceding claims, wherein the water-soluble film comprises a second film and wherein the second film comprises a polymer selected from the group consisting of polymer A, polymer B, polymer C, and a mixture thereof and wherein polymer C comprises polyvinyl alcohol and is different from polymer A, polymer B and the polymer blend of the first film.

14. An article according to the preceding claim wherein the first film and the second film are sealed forming a first enclosed compartment, the first enclosed compartment comprising the fabric or household care detergent composition or part thereof.

15. An article according to any of claims 13 or 14 wherein polymer C is selected from:

i) a polymer consisting essentially of a vinyl alcohol monomer unit, a vinyl acetate monomer unit and a carboxylated monomer unit,
ii) a blend of polymers consisting essentially of a vinyl alcohol monomer unit and a vinyl acetate monomer unit; and
iii) a polymer blend consisting essentially of a polymer consisting of a vinyl alcohol monomer unit and a vinyl acetate monomer unit, and a polymer consisting essentially of a vinyl alcohol monomer unit, a vinyl acetate monomer unit and a carboxylated monomer unit.

16. An article according to the preceding claim wherein polymer C comprises preferably consists essentially of a polymer consisting essentially of a vinyl alcohol monomer unit, a vinyl acetate monomer unit and a carboxylated monomer unit wherein the carboxylated monomer unit is selected from an acrylate, a methacrylate, a maleate, or a mixture thereof, more preferably an acrylate and wherein the polymer has an average degree of hydrolysis of from 80% to 99%, preferably from 88% to 99% and a 4% solution viscosity at 20°C of from 13cP to 28cP, preferably from 18cP to 26cP and an average degree of anionic substitution of from 1% to 10%, preferably from 1% to 4%.

17. An article according to any of claims 13 to 15 wherein polymer C comprises, preferably consists essentially of:

i) from 1% to 70%, preferably from 30% to 70% by weight of polymer C of a polymer consisting essentially of a vinyl alcohol monomer unit and a vinyl acetate monomer unit, wherein the polymer has an average degree of hydrolysis of from 80% to 99.7%, preferably from 85% to 93%, more preferably from 87% to 89% and a 4% solution viscosity at 20°C of from 14.5cP to 25cP, preferably from 17cP to 24cP; and

ii) from 30% to 99%, preferably from 30% to 70% by weight of polymer C of a polymer consisting essentially of a vinyl alcohol monomer unit, a vinyl acetate monomer unit and a carboxylated monomer unit wherein the carboxylated monomer unit is preferably derived from a maleate monomer unit and salts, esters or anhydrides thereof, most preferably monomethylmaleate monomer units, wherein the polymer has an average degree of hydrolysis of from 80% to 99.7%, preferably from 85% to 95%, more preferably from 88% to 92% and a 4% solution viscosity at 20°C of from 4cP to 40cP, preferably from 10cP to 25cP, more preferably from 15cP to 20cP, and an average degree of anionic substitution of from 1% to 10%, preferably 1% to 8%, more preferably from 1% to 4%.

18. An article according to any of claims 13 to 15 wherein polymer C comprises, preferably consists essentially of:

i) a first polymer consisting essentially of a vinyl alcohol monomer unit and a vinyl acetate monomer unit, wherein the first polymer has an average degree of hydrolysis of from 80% to 92%, preferably from 84% to 92% and a 4% solution viscosity at 20°C of from 8cP to 40cP, preferably from 10cP to 20cP, more preferably from 12cP to 14cP; and

ii) a second polymer consisting essentially of a vinyl alcohol monomer unit and a vinyl acetate monomer unit, wherein the second polymer has an average degree of hydrolysis of from 80% to 92%, preferably from 84% to 92% and a 4% solution viscosity at 20°C of from 1cP to 20cP, preferably from 3cP to 15cP, more preferably from 5cP to 10cP; and

wherein the first and the second polymers are present in a weight ratio of from about 9:1 to about 1:9, preferably from about 6:4 to about 4:6.

19. An article according to any of the preceding claims, wherein the water-soluble film comprises a third film and wherein the third film comprises a polymer selected from the group consisting of polymer A, polymer B, polymer C, and mixtures thereof and wherein the third film is different from the first and second film.

20. An article according to any of the preceding claims wherein the first film and the second film, if present, and the third film, if present, comprise an additive selected from the group consisting of plasticizers, plasticizer compatibilizers, lubricants, release agents, fillers, extenders, cross-linking agents, antiblocking agents, antioxidants, detackifying agents, antifoams, nanoparticles, bleaching agents, surfactants, and combinations thereof.

21. An article according to any of the preceding claims having a strength of at least 300N, preferably at least 350N, more preferably at least 400N as measured according to the method described herein.

22. An article according to any of the preceding claims wherein the detergent composition comprises between 5% and 60% by weight of the detergent composition of a non-soap anionic surfactant.

23. An article according to any of the preceding claims wherein the detergent composition comprises between 2.5% and 30% by weight of the detergent composition of a non-ionic surfactant.

24. An article according to any of the preceding claims wherein the detergent composition comprises between 1% and 20% by weight of the detergent composition of water.

25. A process for making an article according to any of the preceding claims, the process comprising the steps of:

i) thermoforming and/or vacuum forming the film to create a cavity;
ii) filling the cavity with a detergent composition or part thereof; and
iii) closing the cavity with another film and/or a pre-formed compartment comprising a detergent composition or part thereof to create a single compartment or a multi-compartment water-soluble unit dose detergent article.

FIG. 1.

FIG 2. Experimental set-up

FIG. 3

# EUROPEAN SEARCH REPORT

**Application Number**

EP 24 17 5476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2022/132846 A1 (PROCTER & GAMBLE [US]) 23 June 2022 (2022-06-23) * claims 1-20 * | 1-25 | INV. C11D3/37 C11D17/04 |
| A | WO 2017/218408 A1 (MONOSOL LLC [US]) 21 December 2017 (2017-12-21) * claims 1,21,24,41,43 * | 1-25 | |
| A | EP 4 015 566 A1 (PROCTER & GAMBLE [US]) 22 June 2022 (2022-06-22) * claims 1-19 * | 1-25 | |
| A | WO 2020/205825 A1 (PROCTER & GAMBLE [US]) 8 October 2020 (2020-10-08) * claims 1-15 * | 1-25 | |
| A | WO 2022/132848 A1 (PROCTER & GAMBLE [US]) 23 June 2022 (2022-06-23) * claims 1-18 * | 1-25 | |
| A | WO 2022/132847 A1 (PROCTER & GAMBLE [US]) 23 June 2022 (2022-06-23) * page 9, line 28 - page 10, line 14; claims 1-19 * | 1-25 | TECHNICAL FIELDS SEARCHED (IPC) C11D |
| A | CA 3 201 171 A1 (PROCTER & GAMBLE [US]) 23 June 2022 (2022-06-23) * claims 1-19 * | 1-25 | |

The present search report has been drawn up for all claims

| Place of search | Date of completion of the search | Examiner |
|---|---|---|
| The Hague | 22 October 2024 | Richards, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 5476

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2024

| Patent document cited in search report | | Publication date | Patent family member(s) | | Publication date |
|---|---|---|---|---|---|
| WO 2022132846 | A1 | 23-06-2022 | EP | 4015566 A1 | 22-06-2022 |
| | | | US | 2022186155 A1 | 16-06-2022 |
| | | | WO | 2022132846 A1 | 23-06-2022 |
| WO 2017218408 | A1 | 21-12-2017 | AR | 108726 A1 | 19-09-2018 |
| | | | AR | 123449 A2 | 30-11-2022 |
| | | | CA | 3025092 A1 | 21-12-2017 |
| | | | CN | 109312276 A | 05-02-2019 |
| | | | EP | 3469058 A1 | 17-04-2019 |
| | | | JP | 7133475 B2 | 08-09-2022 |
| | | | JP | 2019521919 A | 08-08-2019 |
| | | | KR | 20190017794 A | 20-02-2019 |
| | | | TW | 201829605 A | 16-08-2018 |
| | | | US | 2017369823 A1 | 28-12-2017 |
| | | | US | 2020040288 A1 | 06-02-2020 |
| | | | WO | 2017218408 A1 | 21-12-2017 |
| EP 4015566 | A1 | 22-06-2022 | EP | 4015566 A1 | 22-06-2022 |
| | | | US | 2022186155 A1 | 16-06-2022 |
| | | | WO | 2022132846 A1 | 23-06-2022 |
| WO 2020205825 | A1 | 08-10-2020 | CN | 113614216 A | 05-11-2021 |
| | | | EP | 3719109 A1 | 07-10-2020 |
| | | | JP | 2022527480 A | 02-06-2022 |
| | | | US | 2020308516 A1 | 01-10-2020 |
| | | | WO | 2020205825 A1 | 08-10-2020 |
| WO 2022132848 | A1 | 23-06-2022 | CA | 3201151 A1 | 23-06-2022 |
| | | | CN | 116568795 A | 08-08-2023 |
| | | | EP | 4015571 A1 | 22-06-2022 |
| | | | JP | 2023550746 A | 05-12-2023 |
| | | | US | 2022186157 A1 | 16-06-2022 |
| | | | WO | 2022132848 A1 | 23-06-2022 |
| WO 2022132847 | A1 | 23-06-2022 | CA | 3201171 A1 | 23-06-2022 |
| | | | CN | 116568483 A | 08-08-2023 |
| | | | EP | 4015569 A1 | 22-06-2022 |
| | | | JP | 2023550925 A | 06-12-2023 |
| | | | US | 2022186156 A1 | 16-06-2022 |
| | | | WO | 2022132847 A1 | 23-06-2022 |
| CA 3201171 | A1 | 23-06-2022 | CA | 3201171 A1 | 23-06-2022 |
| | | | CN | 116568483 A | 08-08-2023 |
| | | | EP | 4015569 A1 | 22-06-2022 |
| | | | JP | 2023550925 A | 06-12-2023 |
| | | | US | 2022186156 A1 | 16-06-2022 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 17 5476

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2024

| Patent document cited in search report | Publication date | Patent family member(s) | Publication date |
|---|---|---|---|
|  |  | WO 2022132847 A1 | 23-06-2022 |

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060081176 A1
- WO 2022132846 A